# EUROPEAN PATENT SPECIFICATION

(11) **EP 4 535 306 B1**
(45) Date of publication and mention of the grant of the patent: **18.03.2026**
(21) Application number: 23201829.1
(22) Date of filing: 05.10.2023
(51) Int. Cl.: G06V 20/62, G06V 10/82

(54) **METHOD, SYSTEM AND COMPUTING DEVICE FOR AUTOMATIC LICENSE PLATE RECOGNITION**
VERFAHREN, SYSTEM UND COMPUTERVORRICHTUNG ZUR AUTOMATISCHEN KENNZEICHENSCHILDERKENNUNG
PROCÉDÉ, SYSTÈME ET DISPOSITIF INFORMATIQUE POUR RECONNAISSANCE AUTOMATIQUE DE PLAQUE D'IMMATRICULATION

(43) Date of publication of application: 09.04.2025
(73) Proprietor: Kapsch TrafficCom AG, 1120 Wien (AT)
(72) Inventor: RUSSOLD, Markus, 1060 Wien (AT)
(74) Representative: Weiser Voith Gugler Patentanwälte Partnerschaft

(56) References cited:
- US-B2- 8 447 112
- US-B2- 8 582 819
- US-B2- 9 412 031
- SILVA S�RGIO MONTAZZOLLI ET AL: "License Plate Detection and Recognition in Unconstrained Scenarios", SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, vol. 11216 Chap.36, no. 558, 6 October 2018 (2018-10-06), pages 593 - 609, XP047488455, ISBN: 978-3-540-74549-5, [retrieved on 20181006]

## Description

The present invention relates to a method, a system and a computing device for automatic license plate recognition (ALPR) .

Recognising license plates of vehicles is an important task in Intelligent Transportation Systems (ITS) and vehicle tolling applications to identify vehicles for surveillance, routing and tolling. In common ALPR schemes, e.g. as described in Silva et al. "License Plate Detection and Recognition in Unconstrained Scenarios", Proceedings of the European Conference on Computer Vision (ECCV), 2018, pp. 580-596, a camera device is mounted at a surveillance location, e.g. next to or above a road, at the entry or within a parking lot, garage, etc., to record images which each include the license plate number (LPN) of a vehicle. Each of the recorded images is then machine-read by a computing device to recognise the LPN that is included therein. To this end, the computing device usually crops every image to an outer boundary of the license plate, identifies a bounding frame for each of the characters of the LPN within the boundary, feeds those bounding frames, one after the other, to an optical character recognition (OCR) algorithm reading the same, and merges the OCR read characters, one after the other, to the resulting LPN of each image. Based on the recognised LPN, the computing device may initiate a charging process, an opening of a gate or barrier, a routing of the vehicle, etc.

While algorithms for bounding frame identification and for OCR reading have evolved over the years, the error probabilities of wrongly identified bounding frames and wrongly OCR read characters are still high, in particular when images are recorded under bad lighting conditions, at oblique angles, for dirty license plates, concealed LPNs etc. Whenever an LPN is recognised by the computing device with a high error probability (low confidence), surveillance staff needs to review the corresponding recorded image to guarantee a correct recognition of the LPN. Surveillance staff, however, is expensive and the manual review of images takes a long time such that time critical applications like barrier or gate opening and routing are impeded by high error probabilities of current ALPR systems.

US 9, 412, 031 B2 describes a computation and comparison of visual signatures and metadata from pairs of recorded images and an extraction of a vehicle identifier like a license plate number only when the comparison yields similar visual signatures and metadata indicating a violation.

US 8,582,819 B2 describes a comparison of signatures of pairs of licence plate images, some of which being synthetically generated. Weights of a comparison algorithm may be tuned by the synthetically generated signatures.

It is an object of the invention to provide a method, a system and a computing device for ALPR which allow to recognise LPNs with low error probabilities and, thus, more reliabily, cost and time saving.

To this end, the invention provides in a first aspect a method for automatic license plate recognition, comprising:
recording a first set of images each including one of N₁ different license plate numbers;
extracting the license plate number in each image of the first set;
generating an artificial neural network with one output node for each of the N₁ different license plate numbers in the first set;
training the artificial neural network on the images and the extracted license plate numbers of the first set at least until for each image of the first set the output node for the license plate number included in that image outputs the highest value of all output nodes;
recording a sample image including a license plate number that is also included in the images the artificial neural network has been trained on; and
feeding the sample image into the artificial neural network and recognising the license plate number of the sample image as the license plate number of that output node which outputs the highest value.

The method of the invention is based on the surprising finding that images which each include a complete LPN, i.e. not just one character at a time but all the characters of the LPN, can be classified with low error rates by one single artificial neural network (NN) having one output node for each LPN, i.e. by means of a one-to-one mapping between output nodes and LPNs.

In the holistic approach of the invention, the LPNs are extracted from the images of the first set to determine the different LPNs included in the first set, to generate the NN with the appropriate number N₁ of output nodes, and to train the NN with the images and the extracted LPNs. After training, the NN is able to reliably recognise the LPNs it has been trained on, i.e. when the sample image is fed into the NN, the output node for that LPN that is included in the image "fires" reliably, i.e. outputs a distinguished highest value. In this way, the correct LPN is recognised by the trained NN with a low error rate (a high confidence) and without the necessity to identify and OCR-read each of the characters of the license plate number separately. As the trained NN is less error prone, less or no surveillance staff needs to be employed.

Summing up, generating and training the NN with one output node per different LPN to be recognised achieves low error rates and allows for a more reliable, cost and time saving ALPR.

The first set may comprise the images recorded and stored within a certain time interval, e.g., of one hour or less, one day, one week, one year or more. However, due to storage space restrictions or data privacy requirements, a storage of the recorded images for a long time interval is often impossible, for instance prohibited by the General Data Protection Regulation (Regulation (EU) 2016/679, abbreviated GDPR). To overcome this issue, in a preferred embodiment the method of the invention further comprises:
deleting the images of the first set and recording a second set of images each including one of N₂ different license plate numbers;
extracting the license plate number of each image of the second set;
extending the artificial neural network by one output node for each of the different license plate numbers that are included in the second set and not in the first set; and
training the extended artificial neural network on the images and the extracted license plate numbers of the second set at least until for each image of the second set the output node for the license plate number included in that image outputs the highest value of all output nodes;
wherein said steps of feeding and recognising are carried out with the extended artificial neural network.

In this embodiment the NN is generated, extended and trained charge-wise, always with a current one of (at least) two charges while the previous charge/s are deleted, i.e. with a first charge comprising the images and LPNs of the first set recorded and stored within a first time interval, and - after deleting the first charge - a second charge comprising the images and LPNs of the second set recorded and stored within a second time interval, and optionally - after deleting the second charge - with a further (third, fourth, etc.) charge.

To adapt the NN for a reliable recognition of the "new" LPNs, which are included in the images of the current (e.g. the second) set and not in the images of the previous (e.g. the first) set, the different new LPNs are determined from the extracted LPNs of the current set and the NN is extended by one further output node for each different new LPN.

While the current training of the NN is performed on the current set of images - as the images of the previous set/s is/are deleted - applicant's research has shown that the extended NN is still capable of recognising the new as well as the "old" LPNs which are included in the images of the previous set/s and not in the images of the current set. Hence, no "catastrophic forgetting" problem has been observed. Therefore, the sample image may include either a "new" or an "old" LPN, both being reliably recognised by the extended NN.

Seen from another perspective, the extended NN with its one-to-one mapping between output nodes and LPNs is well suited for the charge-wise generating/extending and training such that the images of the previous set/s may be deleted to save storage space and achieve a high standard of data privacy.

In a favourable variant of this embodiment the images of the second set are fed into the artificial neural network and the different license plate numbers that are included in the second set and not in the first set are determined as the different license plate numbers included in those images of the second set for which all of the output nodes output a respective value below a predetermined threshold value. In this way, the NN itself is employed to find out whether an image of the current (e.g. second) set fed into the NN includes an LPN that is old (has one high value of the output nodes) or that is new (only has low values of the output nodes). This allows for a fast determination of the different new LPNs. Optionally, the old LPNs may thereby simultaneously be extracted by the NN.

Advantageously, the mapping between the output nodes and the corresponding license plate numbers is stored in a mapping table. Utilising a mapping table allows to encode/decode each LPN by its corresponding output node, e.g. to increase data privacy when the mapping table may only be accessed by authorised users/personnel. Moreover, the mapping table may be accessed to quickly determine whether an LPN extracted from an image already has a corresponding output node or whether a new output node is to be added to the NN for that LPN.

In a favourable embodiment said step of extracting the license plate number comprises OCR reading the recorded images of the first and/or second sets of images character by character. In this embodiment the inventive method utilises - often pre-existing - OCR reading capabilities to extract all or a part of the LPNs for the subsequent generating, extending and training of the NN.

The NN may be trained on and recognise LPNs in the images as recorded. However, to allow for a less complex NN, e.g. having less nodes and/or layers, and for further reducing the ALPR error rates, it is preferable when the recorded images are pre-processed, in particular by at least one of resizing, converting to grayscale, blur filtering, rotating, cropping to an outer boundary of the license plate, and image sharpening.

In a further beneficial embodiment, in said step/s of training, each image of the first and/or second set is fed into the artificial neural network P times, P being in a range from 2 to 50, preferably from 5 to 20, particularly preferably from 7 to 13. Thereby, the NN is sufficiently trained to recognise the LPN in the recorded images of the first and/or second sets. Moreover, with these numbers of repeated image feeding no catastrophic forgetting of old LPNs has been observed.

The method of the invention may be carried out with many types of NNs suitable for image recognition. In a preferred embodiment the artificial neural network is a convolutional neural network (CNN). A CNN is particularly suited for ALPR and achieves particularly low error rates. Even with a low-complex CNN, which is fast in training and evaluation, low error rates have been achieved.

In a second aspect the invention provides a system for automatic license plate recognition, comprising:
a camera device configured to record a first set of images each including one of N₁ different license plate numbers; and
a computing device configured to
   extract the license plate number in each image of the first set,
   generate an artificial neural network with one output node for each of the N₁ different license plate numbers in the first set, and
   train the artificial neural network on the images and the extracted license plate numbers of the first set at least until for each image of the first set the output node for the license plate number included in that image outputs the highest value of all output nodes;
wherein the camera device is further configured to record a sample image including a license plate number that is also included in the images the artificial neural network has been trained on; and
wherein the computing device is further configured to feed the sample image into the artificial neural network and recognise the license plate number of the sample image as the license plate number of that output node which outputs the highest value.

The system utilises the inventive method in order to recognise LPNs. To this end the system may utilise any of the above-mentioned embodiments to achieve the above-mentioned advantages.

In a third aspect the invention provides for a computing device configured to
receive a first set of images each including one of N₁ different license plate numbers;
extract the license plate number in each image of the first set;
generate an artificial neural network with one output node for each of the N₁ different license plate numbers in the first set;
train the artificial neural network on the images and the extracted license plate numbers of the first set at least until for each image of the first set the output node for the license plate number included in that image outputs the highest value of all output nodes;
receive a sample image including a license plate number that is also included in the images the artificial neural network has been trained on; and
feed the sample image into the artificial neural network and recognise the license plate number of the sample image as the license plate number of that output node which outputs the highest value.

The computing device may as well utilise any of the above-mentioned embodiments to achieve the above-mentioned advantages.

The invention will now be described by means of exemplary embodiments thereof with reference to the enclosed drawings, in which show:
Fig. 1 a system according to the invention for recording images, generating an artificial neural network (NN), training the NN on some of the recorded images, and automatically recognising license plate number (LPN) in at least one recorded sample image by means of the NN, in a schematic top view;
Fig. 2 a computing device of the system of Fig. 1 according to the invention processing the images recorded within a first time interval to generate and train the NN and automatically recognising the LPN in said sample image/s by means of the NN, in a schematic diagram;
Fig. 3 an exemplary data pipeline including the trained NN of Fig. 2 for automatic license plate recognition (ALPR) of images recorded within a second time interval, in a data flow diagram;
Fig. 4 an optional embodiment of the computing device of Fig. 2 processing the images recorded within the second time interval to extend and train the NN and automatically recognising the LPN in said sample image/s by means of the trained extended NN, in a schematic diagram;
Fig. 5 the exemplary data pipeline of Fig. 3 including the trained extended NN of Fig. 4 for ALPR of images recorded within a third time interval, in a data flow diagram; and
Fig. 6 a method according to the invention that is carried out by the system of Fig. 1 in a flow diagram.

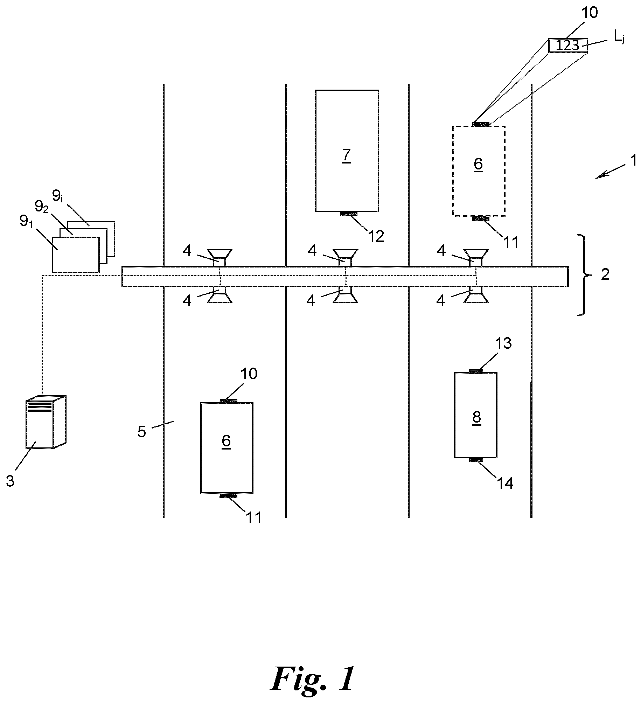

Fig. 1 shows a system 1 that performs automatic license plate recognition (ALPR). The system 1 comprises a camera device 2 for image recording and a computing device 3 for image processing connected to the camera device 2.

The camera device 2 has one or more (here: six) cameras 4 mounted at one or more surveillance locations where license plate numbers (LPNs) Lⱼ are to be recognised for tolling, surveillance, routing, gate opening, etc., here: at a road 5 which is traversed by vehicles 6 - 8, alternatively or additionally: at a parking lot, garage, gate, barrier, etc. By means of the cameras 4, the camera device 2 records images 9₁, 9₂, ..., generally 9ᵢ, of LPNs Lⱼ of license plates 10 - 14 carried by the vehicles 6 - 8. Each recorded image 9ᵢ, thus, includes one LPN Lⱼ. Each LPN Lⱼ, in turn, includes several (at least two, typically four or more) characters which may each be a number, a letter and/or a logogram such as a seal, escutcheon, state emblem, etc., a Chinese, Japanese or Korean character, or the like.

The computing device 3 may comprise one or more computers, servers, mobile devices, tablets, etc., which may be located in the vicinity of the camera device 2, e.g. at the road 5, and/or remote therefrom, e.g. at a back office. The computing device 3 recognises LPNs Lⱼ in the recorded images 9ᵢ and, based thereon, initiates a tolling or charging process, opens a gate or barrier, routes the vehicles 6 - 8, etc.

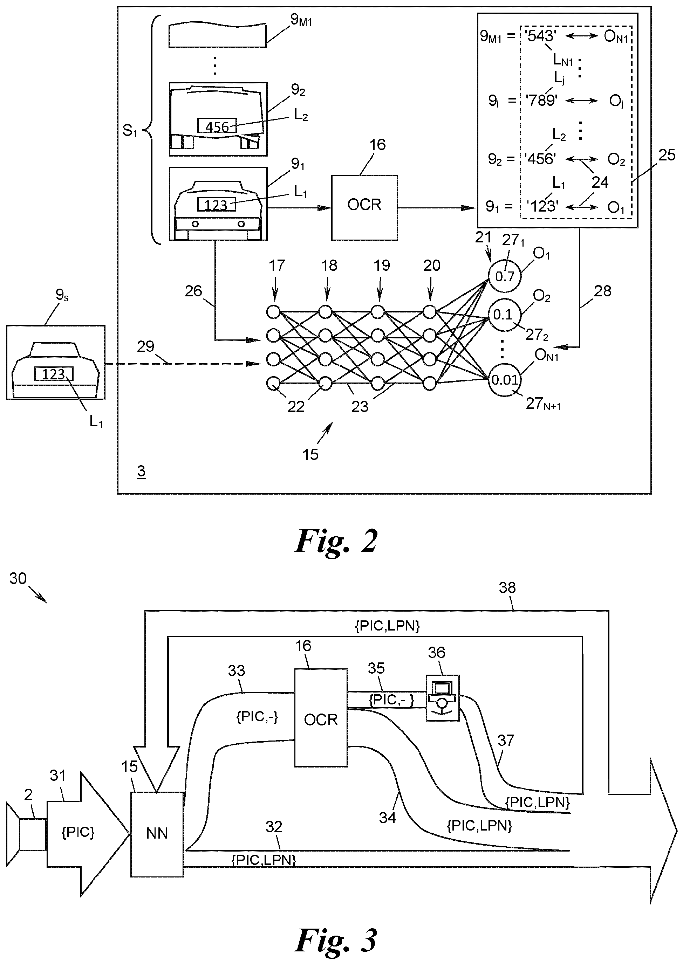

Within a first time interval, e.g., one hour, day, week, month, year or more, the camera device 2 records and transmits a first set S₁ of images 9ᵢ (Fig. 2) to the computing device 3, which generates and trains an artificial neural network (NN) 15 (Fig. 2) on the recorded first set S₁.

Fig. 2 depicts the computing device 3 while processing the first set S₁. The computing device 3 receives, either via a wireless or a wire-bound connection, from the camera device 2 the first set S₁ of images 9ᵢ comprising M₁ images 9₁ - 9_{M1} that each include one of N₁ different LPNs L₁ - L_{N1}. The first set S₁ includes in total M₁ LPNs Lⱼ, N₁ of which LPNs are different from one another. In other words, one or more LPNs Lⱼ may be included in more than one image 9ᵢ of the first set S₁ (M₁ > N₁) or not (M₁ = N₁) .

The computing device 3 extracts the LPN Lⱼ in each image 9ᵢ of the first set S₁. The extracting may be carried out in many ways and optionally employ already existing infrastructure. In the example of Fig. 2 each image 9ᵢ of the first set S₁ is OCR-read character by character by an optical character recognition (OCR) unit 16 to extract the LPN L₁ = '123' in the first image 9₁, the LPN L₂ = '456' in the second image 9₂, etc. In another example the LPN Lⱼ of each image 9ᵢ of the first set S₁ is read out by surveillance staff, stored in a memory of the computing device 3, and extracted by the computing device 3 by accessing the memory. In a further example the images 9ᵢ of the first set S₁ are OCR-read by the OCR unit 16 and only those images 9ᵢ which could not be OCR-read correctly (had a high error probability, i.e. low confidence) are read out by surveillance staff.

The computing device 3 generates the NN 15 with one output node O₁, O₂, ..., generally Oⱼ, for each of the N₁ different LPNs L₁ - L_{N1} in the first set S₁. The NN 15 may be generated as any neural network suitable for image recognition such as a convolutional neural network (CNN), a capsule neural network (CapsNet), etc. and with many suitable structures, e.g. with a variety of types and numbers of layers 17 - 21 and nodes 22, a variety of node connections 23 and node activation functions. However, the NN 15 has one respective output node Oⱼ for each of the N₁ different LPNs Lⱼ in the first set S₁, i.e. N₁ output nodes O₁ - O_{N1} in the output layer 21.

The computing device 3 may generate the NN 15 at once, e.g. after extracting the LPNs Lⱼ, by counting the N₁ different extracted LPNs L₁ - L_{N1} and creating the NN 15 with N₁ output nodes O₁ - O_{N1}. Alternatively, the computing device 3 may generate the NN 15 successively, e.g. during extracting the LPNs Lⱼ, by checking for each extracted LPN Lⱼ whether it is novel (has no corresponding output node Oⱼ yet) and, if so, adding one output node Oⱼ to the NN 15 for that novel LPN Lⱼ.

The computing device 3 optionally stores the mapping between each different LPN Lⱼ and its corresponding output node Oⱼ, e.g. the mapping indicated by arrows 24 between O₁ and '123', O₂ and '456', etc., in a mapping table 25. The computing device 3, thus, may access the mapping table 25 to determine the number N₁ and/or to check whether an LPN Lⱼ extracted from an image 9ᵢ is novel. Alternatively to the mapping table 25, the computing device 3 may indicate the mapping by labelling the respective output node Oⱼ with the corresponding LPN Lⱼ, e.g. by labelling the first node by O_{'123'}, the second node O_{'456'} et cetera (not shown) to conserve the mapping.

The computing device 3 trains the NN 15 on the images 9ᵢ of the first set S₁ and the extracted LPNs Lⱼ of the first set S₁. To this end, the computing device 3 feeds the images 9ᵢ of the first set S₁ into the NN 15 (indicated by arrow 26), compares the values 27ⱼ output by the output nodes Oⱼ with the correct values 27ⱼ / LPN Lⱼ / output node Oⱼ for the respective image 9ᵢ (indicated by arrow 28) and adapts the parameters, e.g. the weights, biases and/or structure, of the NN 15 based on the comparison. For instance, when the first image 9₁ is fed into the NN 15 the value 27₁ of the first output node O₁ aimed at shall be '1' and the values 27_{j,j≠1} of the other output nodes O_{j,j≠1} aimed at shall be '0' since the first LPN L₁ is '123' extracted from the first image 9₁ corresponds to the first output node O₁.

For adapting the parameters the computing device 3 may use any known neural network training algorithm such as backpropagation, difference target propagation, etc.

The training is carried out at least until for each image 9ᵢ of the first set S₁ the output node Oⱼ for the LPN Lⱼ included in that image 9ᵢ outputs the highest value 27ⱼ of all output nodes Oⱼ. For instance, after the training, when the second image 9₂ including the second LPN L₂ '456' is fed into the NN 15, the second output node O₂ for the LPN L₂ '456' included in that image 9₂ should output the highest value 27₂ of all output nodes Oⱼ. To this end, the computing device 3 may feed each image 9ᵢ of the first set S₁ into the NN 15 P times, wherein the number P is in a range from 2 to 50, in particular from 5 to 20, e.g. from 7 to 13.

Said recording, extracting, generating and training steps may be carried out for the whole first set S₁ at once or for successive subsets of the first set S₁, e.g. batch-wise or image-wise. In the latter case, the NN 15 may be generated by repeatedly adding one output node Oⱼ for each novel LPN Lⱼ extracted from a newly recorded image 9ᵢ or batch of the first set S₁ and be trained by repeatedly adding the new recorded image 9ᵢ or batch of the first set S₁ to a training set.

Once the NN 15 has been trained, the computing device 3 utilises the NN 15 for recognising an LPN Lⱼ in at least one fresh ("sample") image 9ₛ it has not been trained on. To this end, the camera device 2 records the sample image 9ₛ, e.g., of the vehicle 6 when it traverses the camera device 2 a second time, indicated by dashed lines in Fig. 1. In the example of Fig. 2, the sample image 9ₛ includes the LPN L₁ = '123' that was also included in the image 9₁ the NN 15 had been trained on. The computing device 3 feeds the sample image 9ₛ into the NN 15 (see arrow 29) and recognises the LPN Lⱼ of the sample image 9ₛ as the LPN Lⱼ of that output node Oⱼ which outputs the highest value 27ⱼ, in Fig. 2: as the LPN L₁ = '123' of the first output node O₁ outputting the highest value 25₁ of '0.7' among all output nodes Oⱼ. To retrieve the LPN L₁ = '123' of the output node O₁ with the highest value 27₁, the computing device 3 may access the mapping table 25 (if present), read the label of the output node O₁ (if labelled), etc.

Fig. 3 shows an exemplary ALPR pipeline 30 including the NN 15 which has been trained on the first set S₁ so far. In the ALPR pipeline 30 the camera device 2 records a stream 31 of images 9ᵢ within a second time interval, e.g. another hour, day, week, month, year, etc. The stream 31 is fed into the trained NN 15 which recognises the LPNs Lⱼ included in the images 9ᵢ of a first portion 32 of the stream 31 and cannot recognise the LPNs Lⱼ in a second portion 33 of the stream 31 because none of its output nodes Oⱼ outputs a value 27ⱼ above a predetermined threshold for images 9ᵢ of the second portion 33. The second portion 33 is then input into the OCR unit 16 which OCR-reads the LPNs Lⱼ in a first part 34 of the second portion 33 and cannot OCR-read the LPNs Lⱼ in a second part 35 of the second portion 33. The images 9ᵢ in the second part 35 are then reviewed and LPN-labelled manually by surveillance staff on terminals 36 and forwarded as manually LPN-labelled part 37 such that finally the LPNs Lⱼ of all images 9ᵢ of the stream 31 are recognised.

As can be seen in Fig. 3, the NN 15 recognises LPNs Lⱼ of images 9ᵢ that cannot be correctly OCR-read, such that the second part 35 is smaller as it were without the NN 15, wherefore less surveillance staff is required at terminals 36 than in conventional ALPR pipelines without the NN 15.

Alternatively to the shown ALPR pipeline 30 the NN 15 may be included in any other type of ALPR pipeline, e.g., be downstream of or parallel to the OCR unit 16, or may be used stand-alone, etc.

As indicated by the feedback stream 38 in Fig. 3, the images 9ᵢ in the streams 34 and 37 (and optionally also in the stream 32) may be used as a second set S₂ of recorded images 9ᵢ to further train the NN 15 and to optionally extend the NN 15 by adding further output nodes O_{N1+1} - O_{N1+N2'} thereto for each novel LPN L_{N1+1} - L_{N1+N2'} in the second set S₂.

In one embodiment the computing device 3 carries out the further training and optional extending with the first and second sets S₁, S₂, which may be seen as an extension of the first set S₁ by the images 9ᵢ of the second set S₂.

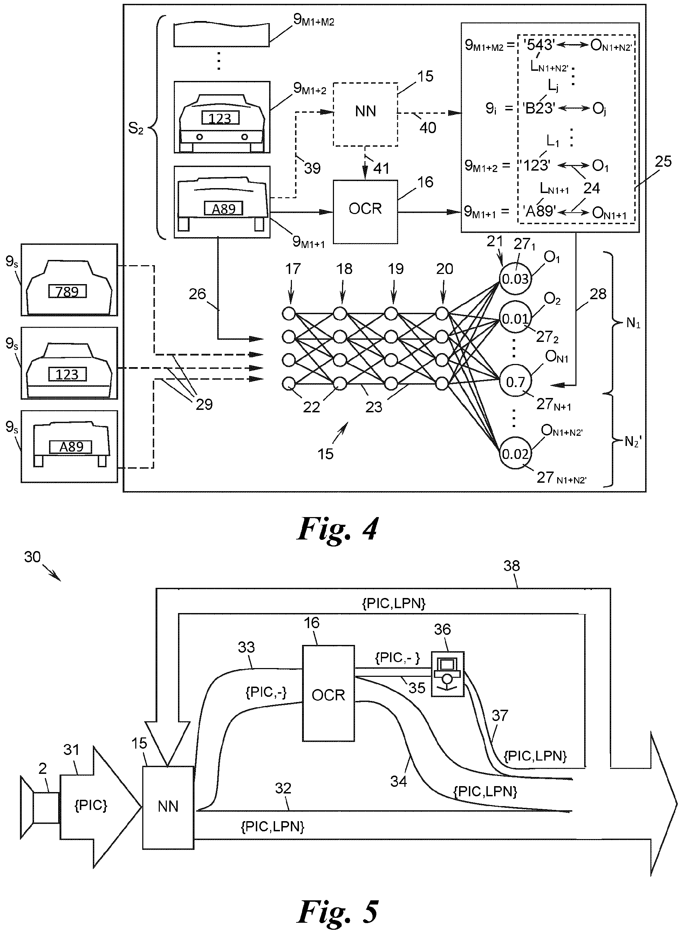

In another embodiment the computing device 3 deletes the first set S₁ of images 9ᵢ after the first time interval and carries out the further training and optional extending with the second set S₂ only. With reference to Fig. 4 an extending and further training of the NN 15 in such an embodiment shall be described. Thereby, the computing device 3 receives the second set S₂ of images 9ᵢ recorded by the camera device 2 within the second time interval. The second set S₂ comprises M₂ images 9_{M1+1} - 9_{M1+M2} that each include one of N₂ different LPNs Lⱼ of the second set S₂. Hence, the second set S₂ includes in total M₂ LPNs Lⱼ, N₂ LPNs thereof being different from one another and N₂' different LPNs L_{N1+1} - L_{N1+N2'} thereof being different from the N₁ LPNs L₁ - L_{N1} of the first set S₁.

The computing device 3 extracts the LPN Lⱼ in each image 9ᵢ of the second set 9₂, e.g. as described above with respect to the first set S₁. Alternatively or in addition to the above-mentioned extractions, the computing device 3 may extract old LPNs Lⱼ of the second set S₂ (which were included in the first set S₁) by feeding the images 9ᵢ of the second set S₂ into the NN 15 (following the dashed arrow 39) and recognising the LPN Lⱼ of each image 9ᵢ for which one output node Oⱼ outputs a respective highest value 27ⱼ above a given threshold as the LPN Lⱼ of that output node Oⱼ (following the dashed arrow 40). Those images 9ᵢ for which no output node Oⱼ outputs a respective highest value 27ⱼ above a given threshold may be input to the OCR unit 16 (following the dashed arrow 41) and, when OCR-reading fails, reviewed by surveillance staff.

When the second set S₂ includes at least one new LPN Lⱼ, i.e. when N₂' is greater than 0, the computing device 3 extends the NN 15 by one output node O_{N1+1}, O_{N1+2}, ..., generally Oⱼ, for each of the N₂' different LPNs L_{N1+1} - L_{N1+N2'} that are included in the second set S₂ and not in the first set S₁, i.e. for each novel LPN Lⱼ. Hence, the extended NN 15 has one respective output node Oⱼ for each of the N₁+N₂ different LPNs Lⱼ in the first and second sets S₁, S₂, i.e. N₁+N₂, output nodes O₁ - O_{N1+N2'} in the output layer 21.

Similar to the above-mentioned generation, the computing device 3 may extend the NN 15 at once for all the extracted LPNs L_{N1+1} - L_{N1+N2'} of the second set S₂ by counting the N₂' different LPNs Lⱼ that were not included in the first set S₁ and extending the NN 15 by N₂' output nodes O_{N1+1} - O_{N1+N2'}; or successively by incrementally adding one output node Oⱼ to the NN 15 whenever a novel LPN Lⱼ is extracted.

To determine the novel LPNs Lⱼ in the images 9ᵢ of the second set S₂ for extending, the computing device 3 may optionally utilise the NN 15 trained on the first set S₁. Thereby, the computing device 3 feeds the images 9ᵢ of the second set S₂ into the NN 15 and determines the different LPNs L_{N1+1} - L_{N1+N2'} that are included in the second set S₂ and not in the first set S₁ (the novel LPNs) as the different LPNs L_{N1+1} - L_{N1+N2'} included in those images 9ᵢ of the second set S₂ for which all of the output nodes Oⱼ output a respective value 27ⱼ below a predetermined threshold value, e.g. in the images 9ᵢ fed into the OCR unit 16 via arrow 41. Alternatively, the computing device 3 may access the mapping table 25 (if present) to determine whether an extracted LPN Lⱼ of the second set S₂ is not already included therein and, thus, is novel.

The computing device 3 may optionally add the mapping between each novel LPN Lⱼ and its corresponding output node Oⱼ to the mapping table 25 (if present).

The computing device 3 trains the extended NN 15 on the images 9ᵢ of the second set S₂ and the extracted LPNs Lⱼ of the second set S₂ as detailed above with reference to Fig. 2 at least until for each image 9ᵢ of the second set S₂ the output node Oⱼ for the LPN Lⱼ included in that image 9ᵢ outputs the highest value 27ⱼ of all output nodes Oⱼ. To this end, each image 9ᵢ of the second set S₂ may optionally be fed into the NN 15 P times.

Once the NN 15 has been trained on the second set S₂, the computing device 3 may utilise the NN 15 to recognise (again or for the first time) the LPN Lⱼ in a sample image 9ₛ recorded by the camera device 2. Therefor, the computing device 3 feeds the recorded sample image 9ₛ into the extended NN 15 and recognises the LPN Lⱼ included in the sample image 9ₛ as detailed above. As shown in Fig. 4, the extended NN 15 may recognise LPNs Lⱼ that were included in the first set S₁ only (like '789' of the upper sample image 9ₛ), that were included in the second set S₂ only (like 'A89' of the middle sample image 9ₛ), or in both sets S₁, S₂ (like '123' of the lower sample image 9ₛ).

Fig. 5 shows the ALPR pipeline 30 including the extended NN 15 which has been trained on the first and second sets S₁, S₂ recorded within the first and second time interval, respectively. The camera device 2 may now record the stream 31 of images 9ᵢ within a third time interval, e.g. another hour, day, week, month, year, etc. The stream 31 is fed into the extended NN 15 which now also recognises the LPNs L_{N1+1} - L_{N1+N2'} that were included in the second set S₂. Consequently, the first portion 32 of the stream is larger and the second portion 33 of the stream 31 is smaller as compared to Fig. 3, such that even less images 9ᵢ in the second part 35 of the second portion 33 need to be reviewed by surveillance staff at terminals 36.

The streams 34 and 37 (and optionally also stream 32) recorded within the third time interval may be used as a third set S₃ of recorded images 9ᵢ to further train the NN 15 and to optionally extend the NN 15 further by adding further output nodes Oⱼ thereto for each novel LPN Lⱼ, as described above. The above-mentioned training and optional extending of the NN 15 may, thus, be continued for further sets S₃, S₄, ..., generally Sₖ, wherein any old set Sₖ₋₁ of images 9ᵢ may optionally be deleted before or while a new set Sₖ of images 9ᵢ is recorded and stored within the respective time interval, LPN-extracted and used to train and optionally extend the NN 15.

Optionally, before said extracting, training and/or recognising steps, the computing device 3 may pre-process the recorded images 9ᵢ. In particular the computing device 3 may, e.g. depending on the recording angles and conditions of the respective image 9₁, convert any image 9ᵢ to grayscale, filter out a blur therein, rotate it, crop it to an outer boundary of the license plate 10 - 14 and/or sharpen it. All of these steps may, of course, may be applied in any order.

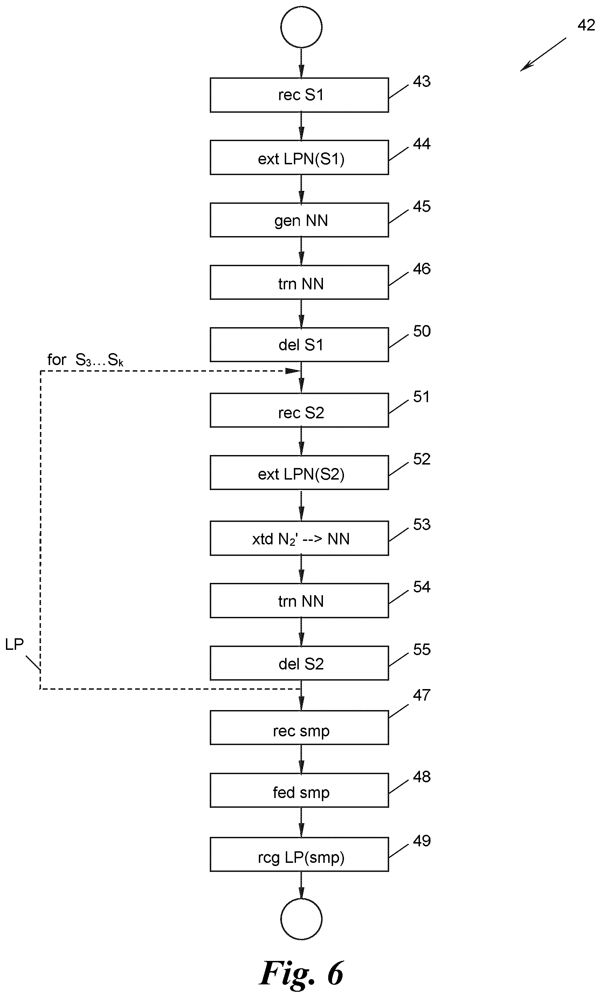

With reference to Fig. 6, a method 42 for ALPR will now be described. The method 42 may be carried out by the system 1 as described above and comprises at least the following steps 43 - 49.

In a first step 43 the first set S₁ of images 9ᵢ is recorded, e.g. by means of the camera device 2 within the first time interval. Each recorded image 9ᵢ includes one of N₁ different LPNs L₁ - L_{N1} and each LPN Lⱼ, in turn, comprises two or more characters.

In a second step 44 the LPN Lⱼ in each image 9ᵢ of the first set S₁ is extracted. Thereby, the recorded images 9₁ of the first set S₁ may be OCR-read character by character by means of the OCR-unit 16 and/or may be read out by surveillance staff.

In a third step 45 the NN 15 is generated with one output node Oⱼ for each of the N₁ different LPNs L₁ - L_{N1} in the first set S₁. The NN 15 may be generated as any neural network suitable for image recognition and with any suitable structure, be it at once for all the extracted LPNs L₁ - L_{N1}, counting the N₁ different LPNs and creating the NN 15 with N₁ output nodes Oⱼ, or successively by incrementally adding one output node Oⱼ to the NN 15 whenever a novel LPN Lⱼ is extracted, as detailed above. Optionally the mapping between each different LPN Lⱼ and its corresponding output node Oⱼ may be stored in the mapping table 25.

In a fourth step 46 the NN 15 is trained on the images 9ᵢ of the first set S₁ and the extracted LPNs L₁ - L_{N1} of the first set S₁. In this step, the images 9ᵢ of the first set S₁ are fed into the NN 15, the values 27ⱼ output by the output nodes Oⱼ are compared with the correct values 27ⱼ indicated by the extracted LPNs L₁ - L_{N1} of the images 9ᵢ and the parameters of the NN 15 are adapted based on the comparison according any known neural network training algorithm such as backpropagation, difference target propagation, etc. The training is carried out at least until for each image 9ᵢ of the first set S₁ the output node Oⱼ for the LPN Lⱼ included in that image 9ᵢ outputs the highest value 27ⱼ of all output nodes Oⱼ.

Optionally, each image 9ᵢ of the first set S₁ may be fed into the NN 15 P times in step 46, the number P being in a range from 2 to 50, in particular from 5 to 20, e.g. from 7 to 13. For example, the NN 15 may be trained a number of P epochs, wherein each image 9ᵢ is fed into the NN 15 in each epoch.

The steps 43 - 46 of recording, extracting, generating and training may be carried out one after the other for the whole first set S₁ at once or in an overlapping manner with successive parts of the first set S₁ being recorded and used for said extracting, generating and training. For example, the NN 15 may be generated by repeatedly adding one output node Oⱼ for each novel LPN Lⱼ extracted from a recently recorded image 9ᵢ or batch of the first set S₁ and be trained by repeatedly adding a recently recorded images 9ᵢ or batch of the first set S₁ to a training set.

In a fifth step 47 a sample image 9ₛ is recorded. The sample image 9ₛ includes an LPN Lⱼ that was also included in the images 9ᵢ the NN 15 had been trained on so far.

In a sixth step 48 the sample image 9ₛ is fed into the NN 15 and in a seventh step 49 the LPN Lⱼ of the sample image 9ₛ is recognised as the LPN Lⱼ of that output node Oⱼ which outputs the highest value 27ⱼ. To retrieve the LPN Lⱼ of the output node Oⱼ that outputs the highest value 27ⱼ, the mapping table 25 (if present) may be accessed, the output node Oⱼ be read (if labelled), etc. as detailed above.

Optionally, the NN 15 may be trained and extended by means of the second set S₂ of images 9ᵢ either in addition to the first set S₁ or after deleting - in an optional eight step 50 - the first set S₁. To this end, the following optional steps 51 - 54 (and further optionally step 55) may be carried out within a second time interval after said step 46 of training.

In a ninth step 51 the second set S₂ of images 9ᵢ is recorded, e.g. by means of the camera device 2 within a second time interval. Each recorded image 9ᵢ of the second set S₂ includes one of N₂ different LPNs L_{N1+1} - L_{N1+N2'}, N₂' of which LPNs were not included in the first set S₁.

In a tenth step 52 the LPN Lⱼ of each image 9ᵢ of the second set 9₂ is extracted either automatically or manually as detailed above for step 44. In addition, the images 9ᵢ of the second set S₂ may optionally be fed into the NN 15 to recognise the LPNs L₁ - L_{N1} that were already included in the first set S₁.

In an eleventh step 53 the NN 15 is extended by one output node O_{N1+1}, O_{N1+2}, ..., generally Oⱼ, for each of the N₂' different LPNs L_{N1+1} - L_{N1+N2'} that are included in the second set S₂ but were not included in the first set S₁, i.e. for each novel LPN Lⱼ of the second set S₂.

To determine the novel LPNs Lⱼ of the second set S₂ the images 9ᵢ of the second set S₂ may optionally be fed into the NN 15 and the different LPNs L_{N1+1} - L_{N1+N2'} that are included in the second set S₂ and not in the first set S₁ (the novel LPNs Lⱼ of the second set S₂) may be determined as the different LPNs L_{N1+1} - L_{N1+N2'} included in those images 9ᵢ of the second set S₂ for which all of the output nodes Oⱼ output a respective value 27ⱼ below a predetermined threshold value. Alternatively, the mapping table 25 (if present) may be accessed to check whether an extracted LPN Lⱼ of the second set S₂ is not already included therein, and, thus, novel.

Optionally the mapping between each novel LPN Lⱼ of the second set S₂ and its corresponding output node Oⱼ may be stored in the mapping table 25 (if present).

In a twelfth step 54 the extended NN 15 is trained on the images 9ᵢ of the second set S₂ and the extracted LPNs Lⱼ of the second set S₂ at least until for each image 9ᵢ of the second set S₂ the output node Oⱼ for the LPN Lⱼ included in that image 9ᵢ outputs the highest value 27ⱼ of all output nodes Oⱼ. Thereby, each image 9ᵢ of the second set S₂ may optionally be fed into the NN 15 P times, P being in a range from 2 to 50, in particular from 5 to 20, e.g. from 7 to 13.

In a thirteenth (optional) step 55 the images 9ᵢ of the second set S₂ may be deleted after the second time interval.

As shown in Fig. 6, the optional steps 51 - 54 (and further optionally 55) may be carried out in a loop LP to record (step 51) a respective third, fourth, etc. set S₃, S₄, ..., generally Sₖ, of images 9ᵢ in step 51 for a third, fourth, etc. time interval, extract (step 52) the LPNs Lⱼ of the respective set Sₖ, extend (step 53) the NN 15 by one output node Oⱼ for each of the different LPNs Lⱼ that are included in the respective set Sₖ and not included in the previous sets Sₖ₋₁, Sₖ₋₂, ..., S₁, train (step 54) the extended NN 15 on the images 9ᵢ and extracted LPNs Lⱼ of the respective set Sₖ and optionally delete (step 55) the respective set Sₖ.

The steps 47 - 49 may be carried out after the first time interval with the NN 15 trained on the first set S₁, after the second time interval with the extended NN 15 trained on the first and second sets S₁, S₂, and/or after any further time interval with the extended NN 15 trained on the first, second, third, etc. sets S₁, S₂, ... Sₖ.

The steps 44, 46, 52, 54, 59 of extracting, training and recognising may be carried out on the images 9ᵢ as recorded. Alternatively, before any of these steps, the recorded images 9ᵢ may be pre-processed. For example, the recorded images 9ᵢ may be resized, converted to grayscale, blur filtered, rotated, cropped to an outer boundary of the license plate and/or image sharpened. These pre-processing steps may be carried out in any order.

The steps 43 - 55 may be carried out in any order, some even simultaneously or in parallel, so far as one step does not depend on the result of another step. For example, the deletion of an old set Sₖ₋₁ in steps 50 and 55 may be carried out before, during or after carrying out any of the recording, extracting, extending and training steps 51 - 54 for a new set Sₖ.

The invention is not restricted to the specific embodiments described above but encompasses all variants, modifications and combinations thereof that fall within the scope of the appended claims.

## Claims

1. A method for automatic license plate recognition, comprising:
recording (43) a first set (S₁) of images (9ᵢ) each including one of N₁ different license plate numbers (Lⱼ);
extracting (44) the license plate number (Lⱼ) in each image (9ᵢ) of the first set (S₁) ;
generating (45) an artificial neural network (15) with one output node (Oⱼ) for each of the N₁ different license plate numbers (L₁ - L_{N1}) in the first set (S₁) ;
training (46) the artificial neural network (15) on the images (9ᵢ) and the extracted license plate numbers (Lⱼ) of the first set (S₁) at least until for each image (9ᵢ) of the first set (S₁) the output node (Oⱼ) for the license plate number (Lⱼ) included in that image (9ᵢ) outputs the highest value (27ⱼ) of all output nodes (Oⱼ);
recording (47) a sample image (9ₛ) including a license plate number (Lⱼ) that is also included in the images (9ᵢ) the artificial neural network (15) has been trained on; and
feeding (48) the sample image (9ₛ) into the artificial neural network (15) and recognising (49) the license plate number (Lⱼ) of the sample image (9ₛ) as the license plate number (Lⱼ) of that output node (Oⱼ) which outputs the highest value (27ⱼ).

2. The method according to claim 1, further comprising:
deleting (50) the images (9ᵢ) of the first set (S₁) and recording (51) a second set (S₂) of images (9ᵢ) each including one of N₂ different license plate numbers (Lⱼ);
extracting (52) the license plate number (Lⱼ) of each image (9ᵢ) of the second set (S₂);
extending (53) the artificial neural network (15) by one output node (Oⱼ) for each of the different license plate numbers (L_{N1+1} - L_{N1+N2'}) that are included in the second set (S₂) and not in the first set (S₁); and
training (54) the extended artificial neural network (15) on the images (9ᵢ) and the extracted license plate numbers (Lⱼ) of the second set (S₂) at least until for each image (9ᵢ) of the second set (S₂) the output node (Oⱼ) for the license plate number (Lⱼ) included in that image (9ᵢ) outputs the highest value (27ⱼ) of all output nodes (Oⱼ);
wherein said steps of feeding (48) and recognising (49) are carried out with the extended artificial neural network (15).

3. The method according to claim 2, wherein the images (9ᵢ) of the second set (S₂) are fed into the artificial neural network (15) and the different license plate numbers (L_{N1+1} - L_{N1+N2'}) that are included in the second set (S₂) and not in the first set (S₁) are determined as the different license plate numbers (Lⱼ) included in those images (9ᵢ) of the second set (S₂) for which all of the output nodes (Oⱼ) output a respective value (27ⱼ) below a predetermined threshold value.

4. The method according to any one of claims 1 to 3, wherein the mapping between the output nodes (Oⱼ) and the corresponding license plate numbers (Lⱼ) is stored in a mapping table (25).

5. The method according to any one of claims 1 to 4, wherein said step (44, 52) of extracting the license plate number (Lⱼ) comprises OCR reading the recorded images (9ᵢ) of the first and/or second sets of images (S₁, S₂) character by character.

6. The method according to any one of claims 1 to 5, wherein the recorded images (9ᵢ, 9ₛ) are pre-processed, in particular by at least one of resizing, converting to grayscale, blur filtering, rotating, cropping to an outer boundary of the license plate, and image sharpening.

7. The method according to any one of claims 1 to 6, wherein, in said step/s (46, 54) of training, each image (9ᵢ) of the first and/or second set (S₁, S₂) is fed into the artificial neural network (15) P times, P being in a range from 2 to 50, preferably from 5 to 20, particularly preferably from 7 to 13.

8. The method according to any one of claims 1 to 7, wherein the artificial neural network (15) is a convolutional neural network.

9. A system for automatic license plate recognition, comprising:
a camera device (2) configured to record (43) a first set (S₁) of images (9ᵢ) each including one of N₁ different license plate numbers (Lⱼ); and
a computing device (3) configured to
extract (44) the license plate number (Lⱼ) in each image (9ᵢ) of the first set (S₁),
generate (45) an artificial neural network (15) with one output node (Oⱼ) for each of the N₁ different license plate numbers (L₁ - L_{N1}) in the first set (S₁), and
train (46) the artificial neural network (15) on the images (9ᵢ) and the extracted license plate numbers (Lⱼ) of the first set (S₁) at least until for each image (9ᵢ) of the first set (S₁) the output node (Oⱼ) for the license plate number (Lⱼ) included in that image (9ᵢ) outputs the highest value (27ⱼ) of all output nodes (Oⱼ);
wherein the camera device (2) is further configured to record (47) a sample image (9ₛ) including a license plate number (Lⱼ) that is also included in the images (9ᵢ) the artificial neural network (15) has been trained on; and
wherein the computing device (3) is further configured to feed (48) the sample image (9ₛ) into the artificial neural network (15) and recognise (49) the license plate number (Lⱼ) of the sample image (9ₛ) as the license plate number (Lⱼ) of that output node (Oⱼ) which outputs the highest value (27ⱼ).

10. The system according to claim 9,
wherein the computing device (3) is further configured to delete (50) the images (9ᵢ) of the first set (S₁);
wherein the camera device (2) is further configured to record (51) a second set (S₂) of images (9ᵢ) each including one of N₂ different license plate numbers (Lⱼ); and
wherein the computing device (3) is further configured to
extract (52) the license plate number (Lⱼ) of each image (9ᵢ) of the second set (S2),
extend (53) the artificial neural network (15) by one output node (Oⱼ) for each of the different license plate numbers (L_{N1+1} - L_{N1+N2'}) that are included in the second set (S₂) and not in the first set (S₁),
train (54) the extended artificial neural network (15) on the images (9ᵢ) and the extracted license plate numbers (Lⱼ) of the second set (S₂) at least until for each image (9ᵢ) of the second set (S₂) the output node (Oⱼ) for the license plate number (Lⱼ) included in that image (9ᵢ) outputs the highest value (27ⱼ) of all output nodes (Oⱼ); and
carry out said feeding (48) and recognising (49) with the extended artificial neural network (15).

11. The system according to claim 10, wherein the computing device (3) is further configured to feed the images (9ᵢ) of the second set (S₂) into the artificial neural network (15) and determine the different license plate numbers (L_{N1+1} - L_{N1+N2'}) that are included in the second set (S₂) and not in the first set (S₁) as the different license plate numbers (Lⱼ) included in those images (9ᵢ) of the second set (S₂) for which all of the output nodes (Oⱼ) output a respective value (27ⱼ) below a predetermined threshold value.

12. The system according to any one of claims 9 to 11, wherein the computing device (3) is further configured to store a mapping between the output nodes (Oⱼ) and the corresponding license plate numbers (Lⱼ) in a mapping table (25).

13. The system according to any one of claims 9 to 12, wherein the computing device (3) is further configured to extract (44, 52) the license plate number (Lⱼ) by OCR reading the recorded images (9ᵢ) of the first and/or second sets (S₁, S₂) of images character by character.

14. The system according to any one of claims 9 to 13, wherein the computing device (3) is further configured to pre-process the recorded images (9ᵢ, 9ₛ), in particular by at least one of resizing, converting to grayscale, blur filtering, rotating, cropping to an outer boundary of the license plate, and image sharpening.

15. A computing device configured to
receive a first set (S₁) of images (9ᵢ) each including one of N₁ different license plate numbers (Lⱼ);
extract (44) the license plate number (Lⱼ) in each image (9ᵢ) of the first set (S₁) ;
generate (45) an artificial neural network (15) with one output node (Oⱼ) for each of the N₁ different license plate numbers (L_{N1+1} - L_{N1+N2'}) in the first set (S₁) ;
train (46) the artificial neural network (15) on the images (9ᵢ) and the extracted license plate numbers (Lⱼ) of the first set (S₁) at least until for each image (9ᵢ) of the first set (S₁) the output node (Oⱼ) for the license plate number (Lⱼ) included in that image (9ᵢ) outputs the highest value (27ⱼ) of all output nodes (Oⱼ);
receive a sample image (9ₛ) including a license plate number (Lⱼ) that is also included in the images (9ᵢ) the artificial neural network (15) has been trained on; and
feed (48) the sample image (9ₛ) into the artificial neural network (15) and recognise (49) the license plate number (Lⱼ) of the sample image (9ₛ) as the license plate number of that output node (Oⱼ) which outputs the highest value (27ⱼ).

## Patentansprüche

1. Verfahren zur automatischen Kennzeichenerkennung, umfassend:
Aufnehmen (43) eines ersten Satzes (S₁) von Bildern (9ᵢ), von welchen jedes eine von N₁ verschiedenen Kennzeichennummern (Lⱼ) enthält;
Extrahieren (44) der Kennzeichennummer (Lⱼ) in jedem Bild (9ᵢ) des ersten Satzes (S₁);
Erzeugen (45) eines künstlichen neuronalen Netzwerkes (15) mit einem Ausgabeknoten (Oⱼ) für jede der N₁ verschiedenen Kennzeichennummern (L₁ - L_{N1}) im ersten Satz (S₁);
Trainieren (46) des künstlichen neuronalen Netzwerkes (15) anhand der Bilder (9ᵢ) und der extrahierten Kennzeichennummern (Lⱼ) des ersten Satzes (S₁), zumindest bis für jedes Bild (9ᵢ) des ersten Satzes (S₁) der Ausgabeknoten (Oⱼ) für die Kennzeichennummer (Lⱼ), welche in diesem Bild (9ᵢ) enthalten ist, den höchsten Wert (27ⱼ) aller Ausgabeknoten (Oⱼ) ausgibt;
Aufnehmen (47) eines Prüfbildes (9ₛ), das eine Kennzeichennummer (Lⱼ) enthält, welche auch in den Bildern (9ᵢ) enthalten ist, anhand welcher das künstliche neuronale Netzwerk (15) trainiert worden ist; und
Einspeisen (48) des Prüfbildes (9ₛ) in das künstliche neuronale Netzwerk (15) und Erkennen (49) der Kennzeichennummer (Lⱼ) des Prüfbildes (9ₛ) als die Kennzeichennummer (Lⱼ) jenes Ausgabeknotens (Oⱼ), welcher den höchsten Wert (27ⱼ) ausgibt.

2. Verfahren nach Anspruch 1, ferner umfassend:
Löschen (50) der Bilder (9ᵢ) des ersten Satzes (S₁) und Aufnehmen (51) eines zweiten Satzes (S₂) von Bildern (9ᵢ), von welchen jedes eine von N₂ verschiedenen Kennzeichennummern (Lⱼ) enthält;
Extrahieren (52) der Kennzeichennummer (Lⱼ) jedes Bildes (9ᵢ) des zweiten Satzes (S₂);
Erweitern (53) des künstlichen neuronalen Netzwerkes (15) um einen Ausgabeknoten (Oⱼ) für jede der verschiedenen Kennzeichennummern (L_{N1+1} - L_{N1+N2'}), welche im zweiten Satz (S₂) und nicht im ersten Satz (S₁) enthalten sind; und
Trainieren (54) des erweiterten künstlichen neuronalen Netzwerkes (15) anhand der Bilder (9ᵢ) und der extrahierten Kennzeichennummern (Lⱼ) des zweiten Satzes (S₂), zumindest bis für jedes Bild (9ᵢ) des zweiten Satzes (S₂) der Ausgabeknoten (Oⱼ) für die Kennzeichennummer (Lⱼ), welche in diesem Bild (9ᵢ) enthalten ist, den höchsten Wert (27ⱼ) aller Ausgabeknoten (Oⱼ) ausgibt;
wobei die genannten Schritte des Einspeisens (48) und Erkennens (49) mit dem erweiterten künstlichen neuronalen Netzwerk (15) ausgeführt werden.

3. Verfahren nach Anspruch 2, wobei die Bilder (9ᵢ) des zweiten Satzes (S₂) in das künstliche neuronale Netzwerk (15) eingespeist werden und die verschiedenen Kennzeichennummern (L_{N1+1} - L_{N1+N2'}), welche im zweiten Satz (S₂) und nicht im ersten Satz (S₁) enthalten sind, als die verschiedenen Kennzeichennummern (Lⱼ) erfasst werden, welche in jenen Bildern (9ᵢ) des zweiten Satzes (S₂) enthalten sind, für die alle Ausgabeknoten (Oⱼ) jeweils einen Wert (27ⱼ) unter einem vorbestimmten Schwellwert ausgeben.

4. Verfahren nach einem der Ansprüche 1 bis 3, wobei die Abbildung zwischen den Ausgabeknoten (Oⱼ) und den zugehörigen Kennzeichennummern (Lⱼ) in einer Abbildungstabelle (25) gespeichert ist.

5. Verfahren nach einem der Ansprüche 1 bis 4, wobei der genannte Schritt (44, 52) des Extrahierens der Kennzeichennummer (Lⱼ) OCR-Lesen der aufgezeichneten Bilder (9ᵢ) des ersten und/oder zweiten Satzes von Bildern (S₁, S₂) Zeichen für Zeichen umfasst.

6. Verfahren nach einem der Ansprüche 1 bis 5, wobei die aufgezeichneten Bilder (9ᵢ, 9ₛ) vorverarbeitet sind, insbesondere durch zumindest eines aus Größenänderung, Umwandlung in Graustufen, Unschärfefilterung, Rotation, Zuschneiden auf eine Außengrenze des Kennzeichens und Bildschärfung.

7. Verfahren nach einem der Ansprüche 1 bis 6, wobei im genannten Schritt/den genannten Schritten (46, 54) des Trainierens jedes Bild (9ᵢ) des ersten und/oder zweiten Satzes (S₁, S₂) P-mal in das künstliche neuronale Netzwerk (15) eingespeist wird, wobei P in einem Bereich von 2 bis 50, bevorzugt von 5 bis 20, besonders bevorzugt von 7 bis 13, liegt.

8. Verfahren nach einem der Ansprüche 1 bis 7, wobei das künstliche neuronale Netzwerk (15) ein Convolutional Neural Network ist.

9. System zur automatischen Kennzeichenerkennung, umfassend:
eine Kameravorrichtung (2), die dazu ausgebildet ist, einen ersten Satz (S₁) von Bildern (9ᵢ) aufzunehmen (43), von welchen jedes eine von N₁ verschiedenen Kennzeichennummern (Lⱼ) enthält; und
eine Rechenvorrichtung (3), die dazu ausgebildet ist,
die Kennzeichennummer (Lⱼ) in jedem Bild (9ᵢ) des ersten Satzes (S₁) zu extrahieren (44),
ein künstliches neuronales Netzwerk (15) mit einem Ausgabeknoten (Oⱼ) für jede der N₁ verschiedenen Kennzeichennummern (L₁ - L_{N1}) im ersten Satz (S₁) zu erzeugen (45), und
das künstliche neuronale Netzwerk (15) anhand der Bilder (9ᵢ) und der extrahierten Kennzeichennummern (Lⱼ) des ersten Satzes (S₁) zu trainieren (46), zumindest bis für jedes Bild (9ᵢ) des ersten Satzes (S₁) der Ausgabeknoten (Oⱼ) für die Kennzeichennummer (Lⱼ), welche in diesem Bild (9ᵢ) enthalten ist, den höchsten Wert (27ⱼ) aller Ausgabeknoten (Oⱼ) ausgibt;
wobei die Kameravorrichtung (2) ferner dazu ausgebildet ist, ein Prüfbild (9ₛ) aufzunehmen (47), das eine Kennzeichennummer (Lⱼ) enthält, welche auch in den Bildern (9ᵢ) enthalten ist, anhand welcher das künstliche neuronale Netzwerk (15) trainiert worden ist; und
wobei die Rechenvorrichtung (3) ferner dazu ausgebildet ist, das Prüfbild (9ₛ) in das künstliche neuronale Netzwerk (15) einzuspeisen (48) und die Kennzeichennummer (Lⱼ) des Prüfbildes (9ₛ) als die Kennzeichennummer (Lⱼ) jenes Ausgabeknotens (Oⱼ), welcher den höchsten Wert (27ⱼ) ausgibt, zu erkennen (49).

10. System nach Anspruch 9,
wobei die Rechenvorrichtung (3) ferner dazu ausgebildet ist, die Bilder (9ᵢ) des ersten Satzes (S₁) zu löschen (50);
wobei die Kameravorrichtung (2) ferner dazu ausgebildet ist, einen zweiten Satz (S₂) von Bildern (9ᵢ) aufzunehmen (51), von welchen jedes eine von N₂ verschiedenen Kennzeichennummern (Lⱼ) enthält; und
wobei die Rechenvorrichtung (3) ferner dazu ausgebildet ist,
die Kennzeichennummer (Lⱼ) jedes Bildes (9ᵢ) des zweiten Satzes (S2) zu extrahieren (52),
das künstliche neuronale Netzwerk (15) um einen Ausgabeknoten (Oⱼ) für jede der verschiedenen Kennzeichennummern (L_{N1+1} - L_{N1+N2'}), welche im zweiten Satz (S₂) und nicht im ersten Satz (S₁) enthalten sind, zu erweitern (53),
das erweiterte künstliche neuronale Netzwerk (15) anhand der Bilder (9ᵢ) und der extrahierten Kennzeichennummern (Lⱼ) des zweiten Satzes (S₂) zu trainieren (54), zumindest bis für jedes Bild (9ᵢ) des zweiten Satzes (S₂) der Ausgabeknoten (Oⱼ) für die Kennzeichennummer (Lⱼ), die in diesem Bild (9ᵢ) enthalten ist, den höchsten Wert (27ⱼ) aller Ausgabeknoten (Oⱼ) ausgibt; und
das genannte Einspeisen (48) und Erkennen (49) mit dem erweiterten künstlichen neuronalen Netzwerk (15) auszuführen.

11. System nach Anspruch 10, wobei die Rechenvorrichtung (3) ferner dazu ausgebildet ist, die Bilder (9ᵢ) des zweiten Satzes (S₂) in das künstliche neuronale Netzwerk (15) einzuspeisen und die verschiedenen Kennzeichennummern (L_{N1+1} - L_{N1+N2'}), welche im zweiten Satz (S₂) und nicht im ersten Satz (S₁) enthalten sind, als die verschiedenen Kennzeichennummern (Lⱼ) zu erfassen, welche in jenen Bildern (9ᵢ) des zweiten Satzes (S₂) enthalten sind, für die alle Ausgabeknoten (Oⱼ) jeweils einen Wert (27ⱼ) unter einem vorbestimmten Schwellwert ausgeben.

12. System nach einem der Ansprüche 9 bis 11, wobei die Rechenvorrichtung (3) ferner dazu ausgebildet ist, eine Abbildung zwischen den Ausgabeknoten (Oⱼ) und den zugehörigen Kennzeichennummern (Lⱼ) in einer Abbildungstabelle (25) zu speichern.

13. System nach einem der Ansprüche 9 bis 12, wobei die Rechenvorrichtung (3) ferner dazu ausgebildet ist, die Kennzeichennummer (Lⱼ) durch OCR-Lesen der aufgezeichneten Bilder (9ᵢ) des ersten und/oder zweiten Satzes (S₁, S₂) von Bildern Zeichen für Zeichen zu extrahieren (44, 52).

14. System nach einem der Ansprüche 9 bis 13, wobei die Rechenvorrichtung (3) ferner dazu ausgebildet ist, die aufgezeichneten Bilder (9ᵢ, 9ₛ) vorzuverarbeiten, insbesondere durch zumindest eines aus Größenänderung, Umwandlung in Graustufen, Unschärfefilterung, Rotation, Beschneiden einer Außengrenze des Kennzeichens und Bildschärfung.

15. Rechenvorrichtung, die dazu ausgebildet ist,
einen ersten Satz (S₁) von Bildern (9ᵢ) zu empfangen, von welchen jedes eine von N₁ verschiedenen Kennzeichennummern (Lⱼ) enthält;
die Kennzeichennummer (Lⱼ) in jedem Bild (9ᵢ) des ersten Satzes (S₁) zu extrahieren (44);
ein künstliches neuronales Netzwerk (15) mit einem Ausgabeknoten (Oⱼ) für jede der N₁ verschiedenen Kennzeichennummern (L_{N1+1} - L_{N1+N2'}) im ersten Satz (S₁) zu erzeugen (45);
das künstliche neuronale Netzwerk (15) anhand der Bilder (9ᵢ) und der extrahierten Kennzeichennummern (Lⱼ) des ersten Satzes (S₁) zu trainieren (46), zumindest bis für jedes Bild (9ᵢ) des ersten Satzes (S₁) der Ausgabeknoten (Oⱼ) für die Kennzeichennummer (Lⱼ), die in diesem Bild (9ᵢ) enthalten ist, den höchsten Wert (27ⱼ) aller Ausgabeknoten (Oⱼ) ausgibt;
ein Prüfbild (9ₛ) zu empfangen, das eine Kennzeichennummer (Lⱼ) enthält, die auch in den Bildern (9ᵢ) enthalten ist, anhand welcher das künstliche neuronale Netzwerk (15) trainiert worden ist; und
das Prüfbild (9ₛ) in das künstliche neuronale Netzwerk (15) einzuspeisen (48) und die Kennzeichennummer (Lⱼ) des Prüfbildes (9ₛ) als die Kennzeichennummer jenes Ausgabeknotens (Oⱼ), welcher den höchsten Wert (27ⱼ) ausgibt, zu erkennen (49) .

## Revendications

1. Procédé de reconnaissance automatique de plaques d'immatriculation, comprenant :
l'enregistrement (43) d'un premier ensemble (S₁) d'images (9ᵢ) incluant chacune un parmi N₁ numéros de plaque d'immatriculation (Lⱼ) différents ;
l'extraction (44) du numéro de plaque d'immatriculation (Lⱼ) dans chaque image (9ᵢ) du premier ensemble (S₁) ;
la génération (45) d'un réseau neuronal artificiel (15) avec un nœud de sortie (Oⱼ) pour chacun des N₁ numéros de plaque d'immatriculation (L₁ - L_{N1}) différents dans le premier ensemble (S₁) ;
l'entraînement (46) du réseau neuronal artificiel (15) sur les images (9ᵢ) et les numéros de plaque d'immatriculation (Lⱼ) extraits du premier ensemble (S₁) au moins jusqu'à ce que, pour chaque image (9ᵢ) du premier ensemble (S₁), le nœud de sortie (Oⱼ) pour le numéro de plaque d'immatriculation (Lⱼ) inclus dans cette image (9ᵢ) sorte la valeur (27ⱼ) la plus élevée de tous les nœuds de sortie (Oⱼ) ;
l'enregistrement (47) d'une image d'essai (9ₛ) incluant un numéro de plaque d'immatriculation (Lⱼ) qui est également inclus dans les images (9ᵢ) sur lesquelles le réseau neuronal artificiel (15) a été entraîné ; et
l'introduction (48) de l'image d'essai (9ₛ) dans le réseau neuronal artificiel (15) et la reconnaissance (49) du numéro de plaque d'immatriculation (Lⱼ) de l'image d'essai (9ₛ) en tant que numéro de plaque d'immatriculation (Lⱼ) de ce nœud de sortie (Oⱼ) qui sort la valeur (27ⱼ) la plus élevée.

2. Procédé selon la revendication 1, comprenant en outre :
la suppression (50) des images (9ᵢ) du premier ensemble (S₁) et l'enregistrement (51) d'un second ensemble (S₂) d'images (9ᵢ) incluant chacune un parmi N₂ numéros de plaque d'immatriculation (Lⱼ) différents ;
l'extraction (52) du numéro de plaque d'immatriculation (Lⱼ) de chaque image (9ᵢ) du second ensemble (S₂) ;
l'extension (53) du réseau neuronal artificiel (15) par un nœud de sortie (Oⱼ) pour chacun des numéros de plaque d'immatriculation (L_{N1+1} - L_{N1+N2'}) différents qui sont inclus dans le second ensemble (S₂) et pas dans le premier ensemble (S₁) ; et
l'entraînement (54) du réseau neuronal artificiel (15) étendu sur les images (9ᵢ) et les numéros de plaque d'immatriculation (Lⱼ) extraits du second ensemble (S₂) au moins jusqu'à ce que, pour chaque image (9ᵢ) du second ensemble (S₂), le nœud de sortie (Oⱼ) pour le numéro de plaque d'immatriculation (Lⱼ) inclus dans cette image (9ᵢ) sorte la valeur (27ⱼ) la plus élevée de tous les nœuds de sortie (Oⱼ) ;
dans lequel lesdites étapes d'introduction (48) et de reconnaissance (49) sont réalisées avec le réseau neuronal artificiel (15) étendu.

3. Procédé selon la revendication 2, dans lequel les images (9ᵢ) du second ensemble (S₂) sont introduites dans le réseau neuronal artificiel (15) et les numéros de plaque d'immatriculation (L_{N1+1} - L_{N1+N2'}) différents, qui sont inclus dans le second ensemble (S₂) et pas dans le premier ensemble (S₁), sont déterminés en tant que les numéros de plaque d'immatriculation (Lⱼ) différents inclus dans ces images (9ᵢ) du second ensemble (S₂) pour lesquelles tous les nœuds de sortie (Oⱼ) sortent une valeur (27ⱼ) respective inférieure à une valeur de seuil prédéterminée.

4. Procédé selon l'une quelconque des revendications 1 à 3, dans lequel le mappage entre les nœuds de sortie (Oⱼ) et les numéros de plaque d'immatriculation (Lⱼ) correspondants est stocké dans une table de mappage (25).

5. Procédé selon l'une quelconque des revendications 1 à 4, dans lequel ladite étape (44, 52) d'extraction du numéro de plaque d'immatriculation (Lⱼ) comprend la lecture OCR des images (9ᵢ) enregistrées des premier et/ou second ensembles d'images (S₁, S₂) caractère par caractère.

6. Procédé selon l'une quelconque des revendications 1 à 5, dans lequel les images (9ᵢ, 9ₛ) enregistrées sont prétraitées, en particulier par au moins un parmi le redimensionne-ment, la conversion en échelle de gris, le filtrage de flou, la rotation, le rognage jusqu'à une limite extérieure de la plaque d'immatriculation, et l'accentuation d'image.

7. Procédé selon l'une quelconque des revendications 1 à 6, dans lequel, dans ladite/lesdites étape/s (46, 54) d'entraînement, chaque image (9ᵢ) des premier et/ou second ensembles (S₁, S₂) est introduite dans le réseau neuronal artificiel (15) P fois, P étant dans une plage de 2 à 50, de préférence de 5 à 20, de manière particulièrement préférée de 7 à 13.

8. Procédé selon l'une quelconque des revendications 1 à 7, dans lequel le réseau neuronal artificiel (15) est un réseau neuronal convolutif.

9. Système de reconnaissance automatique de plaques d'immatriculation, comprenant :
un dispositif de caméra (2) conçu pour enregistrer (43) un premier ensemble (S₁) d'images (9ᵢ) incluant chacune un parmi N₁ numéros de plaque d'immatriculation (Lⱼ) différents ; et
un dispositif de calcul (3) conçu pour
extraire (44) le numéro de plaque d'immatriculation (Lⱼ) dans chaque image (9ᵢ) du premier ensemble (S₁),
générer (45) un réseau neuronal artificiel (15) avec un nœud de sortie (Oⱼ) pour chacun des N₁ numéros de plaque d'immatriculation (L₁ - L_{N1}) différents dans le premier ensemble (S₁), et
entraîner (46) le réseau neuronal artificiel (15) sur les images (9ᵢ) et les numéros de plaque d'immatriculation extraits (Lⱼ) du premier ensemble (S₁) au moins jusqu'à ce que, pour chaque image (9ᵢ) du premier ensemble (S₁), le nœud de sortie (Oⱼ) pour le numéro de plaque d'immatriculation (Lⱼ) inclus dans cette image (9ᵢ) sorte la valeur (27ⱼ) la plus élevée de tous les nœuds de sortie (Oⱼ) ;
dans lequel le dispositif de caméra (2) est en outre conçu pour enregistrer (47) une image d'essai (9ₛ) incluant un numéro de plaque d'immatriculation (Lⱼ) qui est également inclus dans les images (9ᵢ) sur lesquelles le réseau neuronal artificiel (15) a été entraîné ; et
dans lequel le dispositif de calcul (3) est en outre conçu pour introduire (48) l'image d'essai (9ₛ) dans le réseau neuronal artificiel (15) et reconnaître (49) le numéro de plaque d'immatriculation (Lⱼ) de l'image d'essai (9ₛ) en tant que numéro de plaque d'immatriculation (Lⱼ) de ce nœud de sortie (Oⱼ) qui sort la valeur (27ⱼ) la plus élevée.

10. Système selon la revendication 9,
dans lequel le dispositif de calcul (3) est en outre conçu pour supprimer (50) les images (9ᵢ) du premier ensemble (S₁) ;
dans lequel le dispositif de caméra (2) est en outre conçu pour enregistrer (51) un second ensemble (S₂) d'images (9ᵢ) incluant chacune un parmi N₂ numéros de plaque d'immatriculation (Lⱼ) différents ; et
dans lequel le dispositif de calcul (3) est en outre conçu pour
extraire (52) le numéro de plaque d'immatriculation (Lⱼ) de chaque image (9ᵢ) du second ensemble (S2),
étendre (53) le réseau neuronal artificiel (15) par un nœud de sortie (Oⱼ) pour chacun des numéros de plaque d'immatriculation (L_{N1+1} - L_{N1+N2'}) différents qui sont inclus dans le second ensemble (S₂) et pas dans le premier ensemble (S₁),
entraîner (54) le réseau neuronal artificiel étendu (15) sur les images (9ᵢ) et les numéros de plaque d'immatriculation (Lⱼ) extraits du second ensemble (S₂) au moins jusqu'à ce que, pour chaque image (9ᵢ) du second ensemble (S₂), le nœud de sortie (Oⱼ) pour le numéro de plaque d'immatriculation (Lⱼ) inclus dans cette image (9ᵢ) sorte la valeur (27ⱼ) la plus élevée de tous les nœuds de sortie (Oⱼ) ; et
réaliser lesdites introduction (48) et reconnaissance (49) avec le réseau neuronal artificiel étendu (15).

11. Système selon la revendication 10, dans lequel le dispositif de calcul (3) est en outre conçu pour introduire les images (9ᵢ) du second ensemble (S₂) dans le réseau neuronal artificiel (15) et déterminer les numéros de plaque d'immatriculation (L_{N1+1} - L_{N1+N2'}) différents, qui sont inclus dans le second ensemble (S₂) et pas dans le premier ensemble (S₁), en tant que les numéros de plaque d'immatriculation (Lⱼ) différents inclus dans ces images (9ᵢ) du second ensemble (S₂) pour lesquelles tous les nœuds de sortie (Oⱼ) sortent une valeur (27ⱼ) respective inférieure à une valeur de seuil prédéterminée.

12. Système selon l'une quelconque des revendications 9 à 11, dans lequel le dispositif de calcul (3) est en outre conçu pour stocker un mappage entre les nœuds de sortie (Oⱼ) et les numéros de plaque d'immatriculation (Lⱼ) correspondants dans une table de mappage (25).

13. Système selon l'une quelconque des revendications 9 à 12, dans lequel le dispositif de calcul (3) est en outre conçu pour extraire (44, 52) le numéro de plaque d'immatriculation (Lⱼ) par lecture OCR des images (9ᵢ) enregistrées des premier et/ou second ensembles (S₁, S₂) d'images caractère par caractère.

14. Système selon l'une quelconque des revendications 9 à 13, dans lequel le dispositif de calcul (3) est en outre conçu pour prétraiter les images (9ᵢ, 9ₛ) enregistrées, en particulier par au moins un parmi le redimensionnement, la conversion en échelle de gris, le filtrage de flou, la rotation, le rognage jusqu'à une limite extérieure de la plaque d'immatriculation, et l'accentuation d'image.

15. Dispositif de calcul conçu pour
recevoir un premier ensemble (S₁) d'images (9ᵢ) incluant chacune un parmi N₁ numéros de plaque d'immatriculation (Lⱼ) différents ;
extraire (44) le numéro de plaque d'immatriculation (Lⱼ) dans chaque image (9ᵢ) du premier ensemble (S₁) ;
générer (45) un réseau neuronal artificiel (15) avec un nœud de sortie (Oⱼ) pour chacun des N₁ numéros de plaque d'immatriculation (L_{N1+1} - L_{N1+N2'}) différents dans le premier ensemble (S₁) ;
entraîner (46) le réseau neuronal artificiel (15) sur les images (9ᵢ) et les numéros de plaque d'immatriculation (Lⱼ) extraits du premier ensemble (S₁) au moins jusqu'à ce que, pour chaque image (9ᵢ) du premier ensemble (S₁), le nœud de sortie (Oⱼ) pour le numéro de plaque d'immatriculation (Lⱼ) inclus dans cette image (9ᵢ) sorte la valeur (27ⱼ) la plus élevée de tous les nœuds de sortie (Oⱼ) ;
recevoir une image d'essai (9ₛ) incluant un numéro de plaque d'immatriculation (Lⱼ) qui est également inclus dans les images (9ᵢ) sur lesquelles le réseau neuronal artificiel (15) a été entraîné ; et
introduire (48) l'image d'essai (9ₛ) dans le réseau neuronal artificiel (15) et reconnaître (49) le numéro de plaque d'immatriculation (Lⱼ) de l'image d'essai (9ₛ) en tant que numéro de plaque d'immatriculation de ce nœud de sortie (Oⱼ) qui sort la valeur (27ⱼ) la plus élevée.
